# EUROPEAN PATENT APPLICATION

(11) **EP 4 586 390 A1**
(43) Date of publication of application: **16.07.2025**
(21) Application number: 23925972.4
(22) Date of filing: 27.09.2023
(51) Int. Cl.: H01M 50/503, H01M 50/516, H01M 50/528

(54) **BATTERY CELL, BATTERY, AND ELECTRIC DEVICE**

(30) Priority: 03.03.2023 CN 202310200635
(71) Applicant: Contemporary Amperex Technology (Hong Kong) Limited, Central (HK)
(72) Inventor: CHAI, Zhisheng, Ningde, Fujian 352100 (CN)
(74) Representative: Behr, Wolfgang
(86) International application number: PCT/CN2023/122224
(87) International publication number: WO 2024/183270

(57) **Abstract**

Provided in the present application are a battery cell, a battery, and an electric device. The battery cell includes a casing, an electrode assembly, and a current collecting member. The electrode assembly includes a first tab. The casing is used for accommodating the electrode assembly. The current collecting member includes a first connection portion and a second connection portion. The first connection portion is electrically connected to the first tab. The second connection portion is connected to the first connection portion and protrudes in a direction away from the electrode assembly. The second connection portion includes at least one first protrusion and at least one second protrusion. The height of the second protrusion is greater than the height of the first protrusion. The at least one first protrusion is welded to the casing. The at least one second protrusion is welded to the casing.

## Description

### CROSS REFERENCE

The present application makes reference to Chinese Patent Application No. 202310200635.5 filed on March 3, 2023 and entitled "Battery Cell, Battery, and Electric device", which is incorporated herein by reference in its entirety.

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

A current collecting member in a battery needs to conduct a current generated by an electrode assembly to an electrode terminal to output electric power, and the reliability of a conductive connection of the current collecting member has significant impact on battery performance. The current collecting member is generally electrically connected to a casing through welding. High control precision is required for butt alignment and a welding path during welding, or otherwise cold solder joint or missing solder joint may occur due to the shift of a welding position, and further the reliability of a connection between the current collecting member and the casing is affected.

### SUMMARY

The present application aims to solve at least one of the technical problems existing in the prior art. To that end, one objective of the present application is to provide a battery cell, a battery, and an electric device, to improve the reliability of a conductive connection between a current collecting member and a casing.

In a first aspect, an embodiment of the present application provides a battery cell comprising a casing, an electrode assembly, and a current collecting member. The electrode assembly comprises a first tab. The casing defines an accommodation space and an opening located at one end of the accommodation space. The accommodation space is used for accommodating the electrode assembly. The current collecting member is located at one end in the accommodation space in close proximity to the opening. The current collecting member comprises a first connection portion and a second connection portion. The first connection portion is electrically connected to the first tab. The second connection portion is connected to the first connection portion and protrudes in a direction away from the electrode assembly. The second connection portion comprises at least one first protrusion and at least one second protrusion. The height of the second protrusion is greater than the height of the first protrusion. The at least one first protrusion is welded to the casing, and the at least one second protrusion is welded to the casing.

In the technical solution of the present embodiment of the present application, the second connection portion connected to the casing is disposed as the first protrusion and the second protrusion having different heights. In this way, a butt region for a welding connection between the current collecting member and the casing can be increased, and the length of a butt seam between the current collecting member and the casing can be increased, thereby improving the reliability of a conductive connection between the current collecting member and the casing.

In some embodiments, the second connection portion comprises a plurality of first protrusions and a plurality of second protrusions, and the first protrusions and the second protrusions are alternately disposed in a circumferential direction of the electrode assembly. The plurality of first protrusions and the plurality of second protrusions having different heights are alternately disposed, so that an end face of the second connection portion facing away from the electrode assembly may be formed into a surface with alternating heights, which is more conducive to reducing a requirement for welding alignment precision, reducing the occurrence of cold solder joint or missing solder joint, and improving the reliability of a welding connection between the second connection portion and the casing.

In some embodiments, the second connection portion further comprises at least one stress relieving portion, and the stress relieving portion is at least partially located between the first protrusion and second protrusion that are disposed adjacent to each other. Disposing the stress relieving portion between the first protrusion and the second protrusion that are adjacent to each other is conducive to assembling the current collecting member into the casing and welding.

In some embodiments, the stress relieving portion is configured as an indentation, and the indentation penetrates the second connection portion in a thickness direction of the second connection portion. The stress relieving portion configured as an indentation can provide a space for deformation of the second connection portion, so that stress can be relieved at the time of assembling the current collecting member into the casing and welding.

In some embodiments, the stress relieving portion comprises a first part and a second part that are connected to each other, the first part is disposed between the first protrusion and the second protrusion that are disposed adjacent to each other, and the second part is disposed on the first connection portion. Extending the stress relieving portion to the first connection portion can provide a sufficient deformation margin, which is conducive to stress relieving.

In some embodiments, the first connection portion comprises a hollowed-out portion, one end of the second part is in communication with the first part the first part, and the other end is in communication with the hollowed-out portion. The hollowed-out portion is disposed, so that the weight of the current collecting member can be reduced, thereby facilitating a lightweight design of a battery. The indentation is in communication with the hollowed-out portion, so that processing procedures can be simplified during processing.

In some embodiments, an outer side face of the second connection portion abuts against an inner side face of the casing. The outer side face of the second connection portion is disposed to abut against the inner side face of the casing, so that a gap between the current collecting member and the casing attached to each other can be reduced. This is conducive to improving welding quality.

In some embodiments, the casing comprises a third end face that forms the opening, and a first end face of the first protrusion facing away from the first connection portion and a second end face of the second protrusion facing away from the first connection portion are both lower than the third end face. The third end face being higher than the first end face and the second end face can provide an arrangement space within the casing for a weld formed after the current collecting member is welded to the casing, to reduce a risk of interference with another member.

In some embodiments, a minimum height difference between the second end face of the second protrusion and the third end face is greater than 0.4 mm. There is a sufficient interval space between the second end face and the third end face to accommodate a first fusion welding portion, so as to mitigate interference caused by the weld to another member.

In some embodiments, the second connection portion is welded to the casing to form a first fusion welding portion, and a part of the first fusion welding portion is located at a butt seam between a side face of the first protrusion and the inner side face of the casing, and/or at a butt seam between a side face of the second protrusion and the inner side face of the casing, wherein the side face of the first protrusion is adjacent to the first end face of the first protrusion facing away from the first connection portion, and the side face of the second protrusion is adjacent to the second end face of the second protrusion facing away from the first connection portion. A part of the first fusion welding portion may be alternatively located at the butt seam between the side face of the first protrusion and the inner side face of the casing, and/or at the butt seam between the side face of the second protrusion and the inner side face of the casing, so that the length of the first fusion welding portion can be increased, and thus, an overcurrent area between the current collecting member and the casing is increased, and an overcurrent capability and connection reliability are improved.

In some embodiments, the second connection portion is welded to the casing to form the first fusion welding portion, and in an axial direction of the electrode assembly, the height H of the first fusion welding portion from the first connection portion satisfies: H2 ≤ H ≤ H1, wherein H1 is the maximum height of the second protrusion, and H2 is the minimum height of the first protrusion. The height of the first fusion welding portion is controlled to be between the maximum height of the second protrusion and the minimum height of the first protrusion, so that a requirement for precision of butt alignment at the time of welding can be reduced.

In some embodiments, the perimeter of a projection of the inner side face of the casing on a plane perpendicular to the axial direction of the electrode assembly is L, and the length L1 of the first fusion welding portion satisfies L1 ≥ 0.2L. Setting the length L1 of the first fusion welding portion to be greater than or equal to 0.2L can provide a sufficient overcurrent area between the current collecting member and the casing, to satisfy an overcurrent requirement for the current collecting member in a battery.

In some embodiments, the first end face of the first protrusion away from the electrode assembly comprises at least one convex portion, and/or the second end face of the second protrusion away from the electrode assembly comprises at least one convex portion, and the at least one convex portion is one or more of a square tooth, an arc-shaped tooth, a trapezoidal tooth, or a triangular tooth. Disposing the first end face and the second end face to include at least one convex portion can increase the length of the butt seam between the second connection portion and the casing, so that the first fusion welding portion formed by welding can be sufficient in length to satisfy overcurrent and connection requirements.

In some embodiments, the electrode assembly further comprises a second tab, the second tab and the first tab are respectively located at both ends of the electrode assembly, the casing comprises a sidewall, the opening located at one end of the sidewall, and an end wall located at the other end of the sidewall, and the battery cell further comprises an end cap and an electrode lead-out portion, wherein the end cap covers the opening and is fixedly connected to the casing, and the electrode lead-out portion is insulated from and penetrates the end wall and is electrically connected to the second tab. Electrically connecting the electrode assembly to the casing and the electrode lead-out portion respectively can facilitate input and output of electric energy for the electrode assembly.

In a second aspect, an embodiment of the present application provides a battery comprising the battery cell provided in the above embodiments.

In a third aspect, an embodiment of the present application provides an electric device comprising the battery provided in the above embodiment, wherein the battery is used to supply electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application.
FIG. 1 is a schematic diagram of a structure of a vehicle according to some embodiments of the present application;
FIG. 2 is a schematic diagram of a decomposed structure of a battery according to some embodiments of the present application;
FIG. 3 is a schematic diagram of a decomposed structure of a battery cell according to some embodiments of the present application;
FIG. 4 is a schematic diagram of a structure of a current collecting member according to some embodiments of the present application;
FIG. 5 is a partial cross sectional view of the interior of a battery cell according to some embodiments of the present application;
FIG. 6 is a schematic diagram of a structure of a current collecting member according to some other embodiments of the present application;
FIG. 7 is a schematic diagram of a structure of a current collecting member according to still some other embodiments of the present application;
FIG. 8 is a schematic diagram showing that a current collecting member is connected to a casing through welding according to some embodiments of the present application;
FIG. 9 is a schematic diagram showing that a current collecting member is connected to a casing through welding according to some other embodiments of the present application; and
FIG. 10 is a schematic diagram showing that a current collecting member is connected to a casing through welding according to still some other embodiments of the present application.

Description of reference signs:
Vehicle 1000;
Battery 100; Controller 200; Motor 300;
Box 10; First sub-box 11; Second sub-box 12;
Battery cell 20; Casing 21; Electrode assembly 22; First tab 221; Current collecting member 23; First connection portion 231; Second connection portion 232; First protrusion 2321; Second protrusion 2322; Stress relieving portion 2323; First part 2323A; Second part 2323B; First end face 2321A; Second end face 2322A; Third end face 211; End cap 24; First fusion welding portion 25; First butt weld 251; Second butt weld 252; Electrode lead-out portion 26; Preset welding trajectory S1.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

The applicant has noted that a current collecting member inside a battery cell and a casing of the battery cell may be conductively connected through welding. For example, a butt seam between an end face of the current collecting member and an inner side face of the casing may be welded by laser to form a butt weld, but such a connection manner has high requirements for dimension precision and butt alignment precision of the current collecting member and the casing, and if there are large errors such as dimensional tolerance of mechanical structural members (the casing and the current collecting member), tolerance of an apparatus and a clamp, and tolerance accumulation of alignment precision, a laser welding mark may shift up or down, resulting in poor welding effect. For example, when the laser welding mark shifts up and deviates from a butt position between the current collecting member and the casing, a welding connection between the current collecting member and the casing cannot be achieved. For another example, when the laser welding mark shifts down and laser light is completely irradiated on a surface of the current collecting member, cold solder joint may occur between the current collecting member and the casing and a reliable connection cannot be achieved because the current collecting member is different from the casing in terms of materials and the absorptivity to laser.

To alleviate a problem of a poor connection between the current collecting member and the casing, the applicant has found through research that the butt position between the flat end face of the current collecting member and the inner side face of the casing is at the same height, and in an ideal state, the weld is a full circle of butt weld formed along the height. In this case, an overcurrent area of the weld is excessive, and therefore, it is possible to optimize a design of an end face structure of a part in which the current collecting member and the casing butts against each other, and a requirement for alignment precision during welding can be reduced. Thus, even if a welding path is shifted, it is possible to ensure that a welding mark with a sufficient length can be formed between the current collecting member and the casing to achieve a reliable connection and an overcurrent.

Based on the above considerations, to improve the reliability of a connection between the current collecting member and the casing and an overcurrent capacity, the applicant has designed a battery cell after in-depth study. An end face on which the current collecting member butts against the casing is disposed to an end face with different heights, to expand a height range of a butt region between the casing and the current collecting member of the battery cell, and even when a welding mark is shifted, a good welding connection can be formed between a part of the current collecting member and the casing, so that a molten pool having a sufficient length can be formed between the current collecting member and the casing, the reliability of a conductive connection can be improved, and requirements for processing precision of components, aligning precision of a tooling fixture, and welding control precision can be reduced.

The battery cell disclosed in the embodiments of the present application may be, but not limited to, used in an electric device such as a vehicle, a ship, or an aircraft. A power supply system of the electric device can be composed of the battery cell, the battery, and the like disclosed in the present application.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

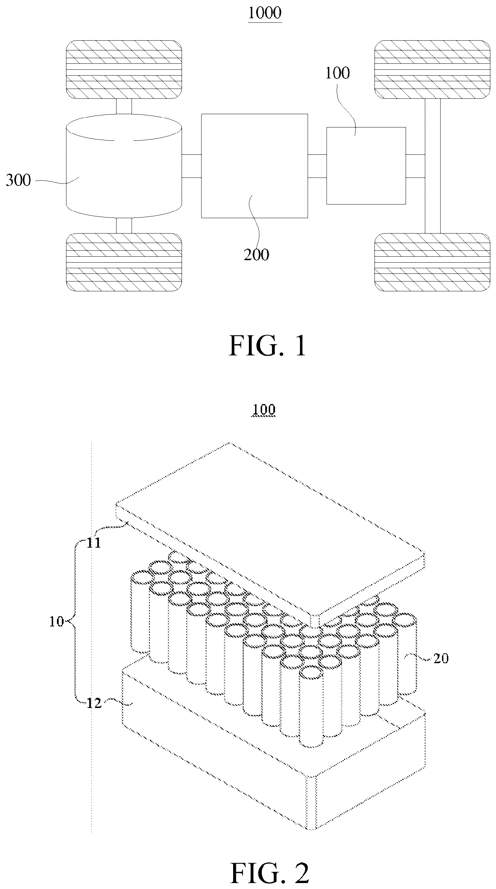

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, and the controller 200 is used to control the battery 100 to power the motor 300, for example, for a working power requirement for the vehicle 1000 during starting, navigating, and driving the vehicle 1000.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG. 2 is a schematic diagram of a decomposed structure of a battery 100 according to some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first sub-box 11 and a second sub-box 12, the first sub-box 11 and the second sub-box 12 cover each other, and the first sub-box 11 and the second sub-box 12 jointly define the accommodation space for accommodating the battery cell 20. The second sub-box 12 may be a hollow structure with an opening at one end, the first sub-box 11 may be a plate-shaped structure, and the first sub-box 11 covers an opening side of the second sub-box 12, so that the first sub-box 11 and the second sub-box 12 jointly define the accommodation space. Alternatively, the first sub-box 11 and the second sub-box 12 each may be a hollow structure with an opening at one end, and an opening side of the first sub-box 11 covers an opening side of the second sub-box 12. Certainly, the box 10 formed by the first sub-box 11 and the second sub-box 12 may be in various shapes such as cylinder, rectangular cuboid, etc.

In the battery 100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a current converging component for implementing an electrical connection between the plurality of battery cells 20.

Here, each battery cell 20 may be a secondary battery or a primary battery, or may be a lithium-sulfur battery, a sodium-ion battery, or a magnesium-ion battery, but is not limited thereto. The battery cell 20 may be in the shape of cylinder, flat body, rectangular cuboid, etc.

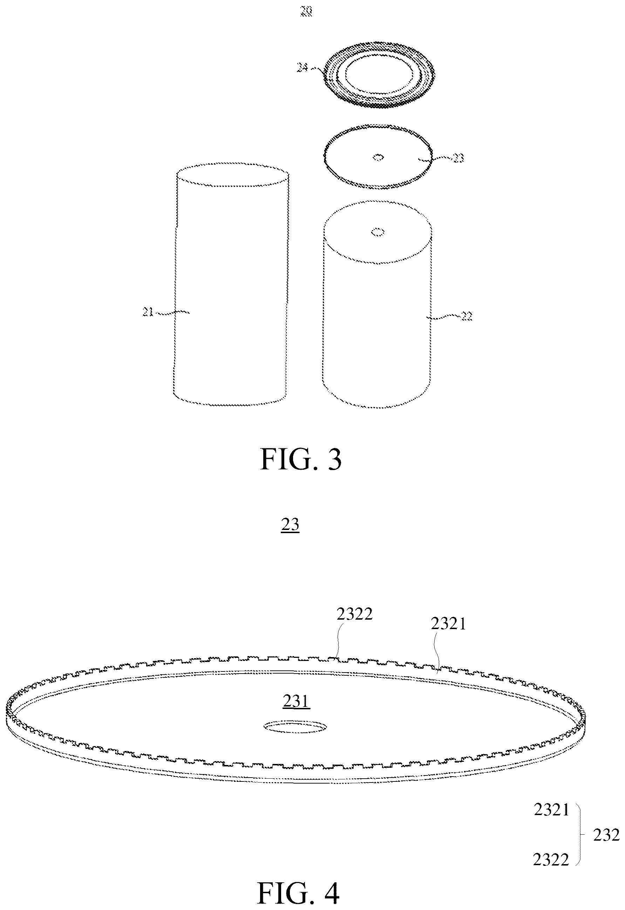

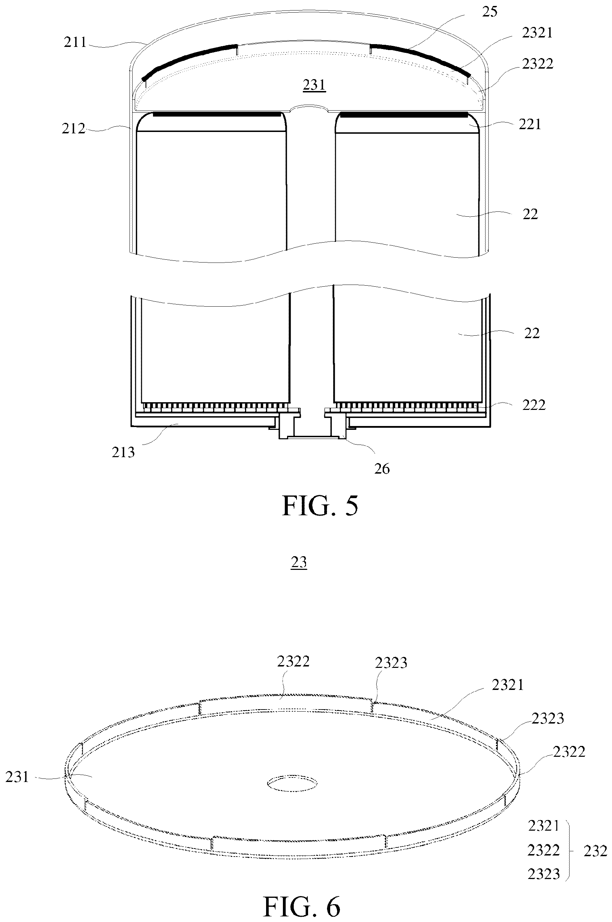

Referring to FIG. 3 to FIG. 5, FIG. 3 is a schematic diagram of a decomposed structure of a battery cell 20 according to some embodiments of the present application, FIG. 4 is a schematic diagram of a structure of a current collecting member 23 according to some embodiments of the present application, and FIG. 5 is a partial cross sectional view of a battery cell 20 according to some embodiments of the present application. The battery cell 20 refers to a minimum unit constituting a battery. The battery cell 20 includes a casing 21, an electrode assembly 22, a current collecting member 23, and other functional components. The electrode assembly 22 includes a first tab 221. The casing 21 defines an accommodation space and an opening located at one end of the accommodation space. The accommodation space is used for accommodating the electrode assembly 22. The current collecting member 23 is located at one end in the accommodation space in close proximity to the opening. The current collecting member 23 includes a first connection portion 231 and a second connection portion 232. The first connection portion 231 is electrically connected to the first tab 221. The second connection portion 232 is connected to the first connection portion 231 and protrudes in a direction away from the electrode assembly 22. The second connection portion 232 includes at least one first protrusion 2321 and at least one second protrusion 2322. The height of the second protrusion 2322 is greater than the height of the first protrusion 2321. The at least one first protrusion 2321 is welded to the casing 21, and the at least one second protrusion 2322 is welded to the casing 21.

The casing 21 is an assembly that forms an internal environment of the battery cell 20. Here, the formed internal environment may be used to accommodate the electrode assembly 22, an electrolyte, and another assembly. The casing 21 may be in various shapes and various dimensions, such as rectangular cuboid, cylinder, hexagonal prism, etc. Specifically, the shape of the casing 21 may be determined based on a specific shape and dimension of the electrode assembly 22. The casing 21 may be made of various materials, such as copper, iron, aluminum, stainless steel, aluminum alloy, plastic, etc. This is not specially limited in the embodiments of the present application.

The electrode assembly 22 is a component in the battery cell 20 in which an electrochemical reaction occurs. The casing 21 may include one or more electrode assemblies 22. The electrode assembly 22 is mainly formed by winding or stacking a positive electrode sheet and a negative electrode sheet, and a separator is generally provided between the positive electrode sheet and the negative electrode sheet. Parts of the positive electrode sheet and the negative electrode sheet with an active material constitute a main body of the electrode assembly, and parts of the positive electrode sheet and the negative electrode sheet with no active material each constitutes a tab. Tabs may be classified into a first tab and a second tab. One of the first tab and the second tab is a positive tab, and the other is a negative tab. The first tab and the second tab may be jointly located at one end of the main body or at both ends of the main body respectively. In a charging/discharging process of a battery, an active material of a positive electrode and an active material of a negative electrode react with the electrolyte, and the tab is connected to an electrode lead-out portion to form a current circuit.

The first tab 221 may be connected to the current collecting member 23 and electrically connected to the casing 21 via the current collecting member 23. In this way, the casing 21 may serve as an electrode lead-out portion of the first tab 221 for inputting or outputting electric power.

The current collecting member 23 is located at one end in an accommodation space of the casing 21 in close proximity to the opening, and is connected to the first tab 221 of the electrode assembly 22 and the casing 21 respectively to conduct a current generated by the electrode assembly 22 to the casing 21. The shape of the current collecting member 23 may adapt to the shape of the casing 21. For example, the casing 21 is in a cylindrical shape, the first connection portion 231 of the current collecting member 23 may also be in a circular shape, and the second connection portion 232 may be located at an outer edge of the circular shape of the first connection portion 231 and protrude in a direction away from the electrode assembly 22.

Because the current collecting member 23 is located inside the casing 21, welding is limited by a space inside the casing. In addition, during butt welding, high requirements are imposed on a processing dimension and alignment precision of a member to be welded, or otherwise, there may be a significant deviation between an actual welding position and a preset welding path during welding. Because the current collecting member 23 and the casing 21 are different in terms of materials, the current collecting member 23 and the casing 21 have different welding performance. In the example of laser welding, power of laser during butt welding is maintained at a specified value, to fuse and connect a butt member at a butt position. If the laser is not emitted to a butt seam, that is, welding shift occurs, the specified laser power can not necessarily satisfy a requirement for forming a molten pool under another condition. For example, when the actual welding position is shifted in a direction approaching the electrode assembly, the laser is no longer emitted to a butt seam between the second connection portion 232 of the current collecting member 23 and casing 21, but is entirely emitted to a surface of the second connection portion 232. In this case, to form a molten pool for welding, the laser needs to penetrate the second connection portion to form a deep-molten weld. However, laser power required by deep penetration welding is greater than laser power required by butt welding. In this case, the specified laser power cannot satisfy the requirement for forming the molten pool, and cold solder joint or missing solder joint occurs between the second connection portion 232 and the casing 21. When the actual welding position is shifted to a direction approaching the opening of the casing 21, there may be no current collecting member 23 in a region irradiated with the laser, and as such, a fusion weld cannot be formed between the current collecting member 23 and the casing 21.

The first connection portion 231 includes a first side face and a second side face that are opposite to each other, the first side face is a side surface away from the electrode assembly 22, the second side face is a side surface facing the electrode assembly 22, and the second connection portion 232 is located on the first side face of the first connection portion 231 and protrudes in a direction away from the electrode assembly 22.

The second connection portion 232 includes a first protrusion 2321 and a second protrusion 2322, the height of the second protrusion 2322 refers to the height of the second protrusion 2322 from the first side face of the first connection portion 231 in an axial direction of the electrode assembly 22, and the height of the first protrusion 2321 refers to the height of the second protrusion 2322 from the first side face of the first connection portion 231 in the axial direction of the electrode assembly 22. There may be one or more first protrusions 2321, and there may be one or more second protrusions 2322. A plurality of first protrusions 2321 and a plurality of second protrusions 2322 may be alternately disposed, for example, one first protrusion 2321 is disposed between two adjacent second protrusions 2322. Alternatively, the plurality of first protrusions 2321 and the plurality of second protrusions 2322 may be disposed non-alternately, for example, a plurality of first protrusions 2321 are provided between two adjacent second protrusions 2322.

The height of the first protrusion 2321 is different from that of the second protrusion 2322, so that a part of a weld formed between the second connection portion 232 and the casing 21 is located between the first protrusion 2321 and the casing 21, and the other part is located between the second protrusion 2322 and the casing 21.

It may be understood that the second connection portion 232 may further include at least one protrusion having a height different from the height of the first protrusion 2321 and the height of the second protrusion 2322, so that butt positions between the second connection portion 232 and the casing 21 may be distributed at positions with different heights in the axial direction of the electrode assembly. This is advantageous in that a weld with a sufficient length can be formed even when a welding position is shifted.

In the present embodiment, the second connection portion 232 includes the first protrusion 2321 and the second protrusion 2322 having different heights. Thereby, butt seams between the second connection portion 232 and the casing 21 are not at the same height, but at a plurality of different heights distributed in the axial direction of the electrode assembly 22. As such, a butt region for a welding connection between the current collecting member 23 and the casing 21 can be increased, and the length of the butt seam between the current collecting member 23 and the casing 21 can be increased. In this way, even when the actual welding position is shifted from the preset welding position, there can be a corresponding butt seam for welding therebetween to form a fused weld, so that the reliability of the connection between the current collecting member 23 and the casing 21 is improved.

In some embodiments, the second connection portion 232 includes a plurality of first protrusions 2321 and a plurality of second protrusions 2322, and the first protrusions 2321 and the second protrusions 2322 are alternately disposed at intervals in a circumferential direction of the electrode assembly 22.

The second connection portion 232 includes the first protrusions 2321 and the second protrusions 2322, the first protrusions 2321 and the second protrusions 2322 are alternately disposed in sequence in the circumferential direction of the electrode assembly 22, and the heights of the first protrusions 2321 and the second protrusions 2322 respectively refer to the heights thereof protruding from the first connection portion 231, for example, the height of the first protrusion 2321 may be the height of an end surface of the first protrusion 2321 away from the first connection portion 231 relative to a first side face, and the height of the second protrusion 2322 may be the height of an end surface of the second protrusion 2322 away from the first connection portion 231 relative to the first side face.

In the present embodiment, the plurality of first protrusions 2321 and the plurality of second protrusions 2322 having different heights are alternately disposed, so that an end surface of the second connection portion 232 away from the electrode assembly 22 can be formed as a surface having alternating heights. This is more advantageous in reducing a requirement for welding alignment precision, reducing the occurrence of cold solder joint or missing solder joint caused by insufficient welding precision, and improving the reliability of a welding connection between the second connection portion 232 and the casing 21.

Referring to FIG. 6, FIG. 6 is a schematic diagram of a structure of a current collecting member 23 according to some other embodiments of the present application. In some embodiments, the second connection portion 232 further includes at least one stress relieving portion 2323, and the stress relieving portion 2323 is at least partially located between the first protrusion 2321 and the second protrusion 2322 that are disposed adjacent to each other.

The current collecting member 23 needs to be assembled to a specified position inside the casing 21 before being welded, and the second connection portion 232 needs to be held in conforming alignment with the casing 21 during welding to reduce a gap therebetween, so as to form, through welding, a fusion weld satisfying a quality requirement. Therefore, the dimension of an outer ring of the current collecting member 23 needs to be matched with the dimension of an inner ring of the casing 21 as much as possible. In this way, the casing 21 tends to squeeze the current collecting member 23 when the current collecting member 23 is being fitted into the casing, causing uncontrollable deformation to the current collecting member 23 due to compressive stress, thereby affecting alignment during assembly and welding. Likewise, thermal stress generated during welding may also cause stress deformation to the current collecting member 23, making it disadvantageous in maintaining alignment precision and welding precision.

When the current collecting member 23 is being fitted into the casing or is being welded, the stress relieving portion 2323 can conduct and relieve, in a timely manner, the compressive stress or the thermal stress generated during welding that is experienced by the second connection portion 232. In particular, the first protrusion 2321 and the second protrusion 2322 are different from each other in height, stress concentration is likely to occur at a boundary position therebetween. Disposing the stress relieving portion 2323 between the first protrusion 2321 and the second protrusion 2322 that are adjacent to each other can relieve the stress concentration at the boundary position between the first protrusion 2321 and the second protrusion 2322, reduce impact exerted by stress deformation on a surrounding structure, offset the lack of alignment precision or the lack of welding precision caused by the stress effect, and facilitate fitting and assembling of the current collecting member 23 into the casing and welding.

The stress relieving portion 2323 may be configured as a weak portion between the first protrusion 2321 and the second protrusion 2322, and the structural strength of the weak portion is weaker than that of the first protrusion 2321 and the second protrusion 2322. In this way, stress can be relieved through structural deformation, and a risk of a structural failure caused by the stress concentration can be reduced. In one example, the weak portion may be a groove that is recessed in a thickness direction of the second connection portion 232. In this case, the thickness of the weak portion is thinner than the thicknesses of the first protrusion 2321 and the second protrusion 2322 that are adjacent to each other. Thus, the weak portion may be greatly deformed under stress to relieve the stress. In other examples, the stress relieving portion 2323 may be alternatively configured as an elastic portion having certain elasticity, and the stress may be relieved through elastic deformation. In some other examples, the stress relieving portion 2323 may be a hole or a slot that penetrates the second connection portion 232 along the thickness of the second connection portion 232. In this way, the stress relieving portion 2323 may relieve stress by using a free edge on the edge. It should be noted that a structural form of the stress relieving portion 2323 described in the present embodiment is illustrative and should not be construed as a limitation on the present embodiment.

In some embodiments, as shown in FIG. 6, the stress relieving portion 2323 is configured as an indentation, and the indentation penetrates the second connection portion 232 in the thickness direction of the second connection portion 232.

The stress relieving portion 2323 may be an indentation located between the first protrusion 2321 and the second protrusion 2322 that are adjacent to each other, and the indentation penetrates the second connection portion 232 in the thickness direction of the second connection portion 232, so that a groove passing through is formed between the first protrusion 2321 and the second protrusion 2322 that are adjacent to each other, and the height of the bottom of the groove from the first connection portion 231 is less than the height of the first protrusion 2321 and the height of the second protrusion 2322. In this way, edges of the first protrusion 2321 and the second protrusion 2322 on a side close to the groove become free edges, which can be deformed under stress to relieve the stress.

Configuring the stress relieving portion 2323 as an indentation can relieve the stress in a timely manner, control an impact range of stress deformation, and facilitate maintaining precision of assembly alignment and welding.

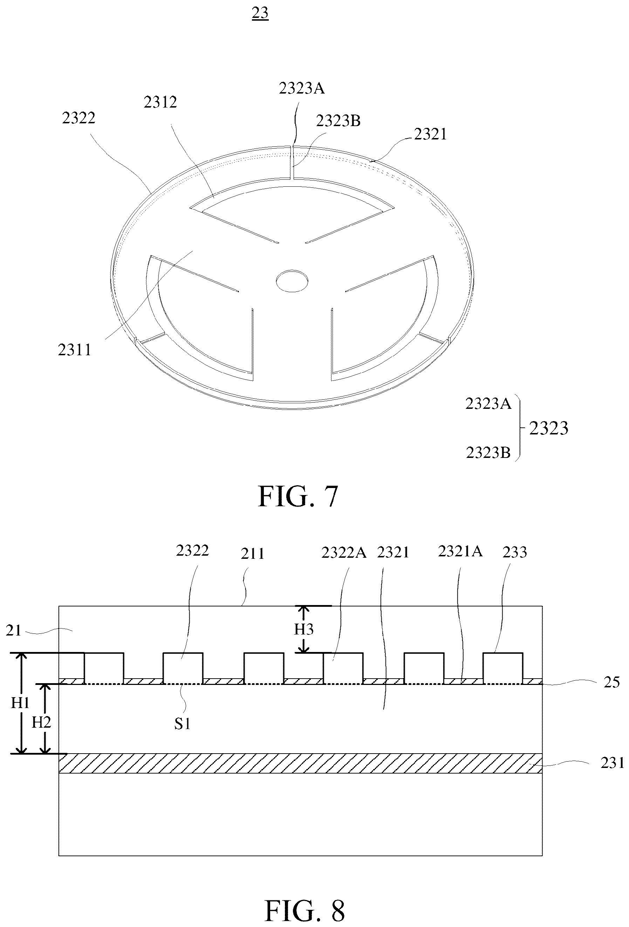

Referring to FIG. 7, FIG. 7 is a schematic diagram of a structure of a current collecting member 23 according to still some other embodiments of the present application. In some embodiments, the stress relieving portion 2323 includes a first part 2323A and a second part 2323B that are connected to each other, the first part 2323A is disposed between the first protrusion 2321 and the second protrusion 2322 that are disposed adjacent to each other, and the second part 2323B is disposed on the first connection portion 231.

The second part 2323B being disposed on the first connection portion 231 means that the stress relieving portion 2323 extends from the second connection portion 232 to the first connection portion 231. As such, the first protrusion 2321 and the second protrusion 2322 of the second connection portion 232 that are located on both sides of the stress relieving portion 2323 are completely spaced apart by the stress relieving portion 2323. The first part 2323A and the second part 2323B may have the same structural form or different structural forms. In one example, the first part 2323A is an indentation that penetrates the second connection portion 232 in the thickness direction of the second connection portion 232, the second part 2323B may be a groove that is recessed in a thickness direction of the first connection portion 231, or the second part 232B is also an indentation that penetrates the first connection portion 231 in the thickness direction of the first connection portion 231, and a communicated groove-shaped indentation is formed between the first part 2323A and the second part 2323B.

Extending the stress relieving portion 2323 to the first connection portion 231 may be more advantageous in blocking negative impact caused by stress deformation, and disposing the second part 2323B on the first connection portion 231 may also provide a space for an outer edge of the first connection portion 231 to relieve stress.

In some embodiments, as shown in FIG. 7, the first connection portion 231 includes a hollowed-out portion 2312, one end of the second part 2323B is in communication with the first part 2323A, and the other end is in communication with the hollowed-out portion 2312.

The first connection portion 231 may include a tab connection portion 2311 and a hollowed-out portion 2312, and the hollowed-out portion 2312 refers to a hollowed-out structure that penetrates the first connection portion 231 in the thickness direction of the first connection portion 231. The tab connection portion 2311 is used to be connected to the first tab 221 through welding. The hollowed-out portion 2312 may include a plurality of hollowed-out regions that are spaced apart from each other, and the tab connection portion 2311 is located between adjacent hollowed-out regions.

In one example, the first part 2323A is an indentation that penetrates the second connection portion 232 in the thickness direction of the second connection portion 232, the second part 2323B may be an indentation that penetrates the first connection portion 231 in the thickness direction of the first connection portion 231, one end of the second part 2323B is in communication with the first part 2323A, and the other end is in communication with the hollowed-out portion 2312, so that a connected hollowed-out structure is formed between the first part 2323A and the hollowed-out portion 2312.

Disposing the hollowed-out portion 2312 can reduce the weight of the current collecting member 23, thereby facilitating a lightweight design of a battery cell 20. The stress relieving portion 2323 is in communication with the hollowed-out portion 2312, so that the outer edge of the current collecting member 23 can be divided into a plurality of sub-structures independent from each other, facilitating assembly alignment and welding alignment of the current collecting member 23, and further improving connection reliability.

In some embodiments, an outer side face of the second connection portion 232 abuts against an inner side face of the casing 21.

The outer side face of the second connection portion 232 refers to a side surface of the second connection portion 232 facing away from the axis of the electrode assembly 22, and the inner side face of the casing 21 refers to a side surface facing the electrode assembly 22. The current collecting member 23 needs to be inserted into the casing 21 during assembly, and the outer side face of the second connection portion 232 butts and is positioned against the inner side face of the casing 21, and then, welding is performed to form a weld. Abutting means that when the outer side face of the second connection portion 232 and the inner side face of the casing 21 butt and are positioned against each other, the two surfaces come into contact with each other, to reduce the gap therebetween and reduce a possibility of cold solder joint or missing solder joint. In one example, the outer side face of the second connection portion 232 and the inner side face of the casing 21 may be in interference fit to ensure abutment therebetween.

Abutting the outer side face of the second connection portion 232 and the inner side face of the casing 21 against each other makes it possible to reduce a bonding gap as much as possible, thereby facilitating improvement of welding quality.

Referring to FIG. 8, FIG. 8 is a schematic diagram showing that the current collecting member 23 is connected to the casing 21 through welding according to some embodiments of the present application. In some embodiments, the casing 21 includes a third end face 211 that forms an opening, and the first end face 2321A of the first protrusion 2321 facing away from the first connection portion 231 and the second end face 2322A of the second protrusion 2322 facing away from the first connection portion 231 are both lower than the third end face 211.

Both the first end face 2321A and the second end face 2322A being lower than the third end face 211 means that after the current collecting member 23 is assembled into the casing 21, in an axial direction of the electrode assembly 22, the highest points (in a non-planar case) of the first end face 2321A and the second end face 2322A remain lower than the third end face 211.

In the present embodiment, the third end face 211 is higher than the first end face 2321A and the second end face 2322A, so that the current collecting member 23 may be completely accommodated in the accommodation space formed by the casing 21 without protruding out of the casing 21 to interfere with another member.

In some embodiments, as shown in FIG. 8, a minimum height difference H3 between the second end face 2322A and the third end face 211 is greater than 0.4 millimeters (mm).

Considering that the second end face 2322A and the third end face 211 may not be planes, for example, may be curved surfaces, the minimum height difference H3 between the second end face 2322A and the third end face 211 refers to a distance between two points with the shortest distance between the second end face 2322A and the third end face 211 in the axial direction of the electrode assembly 22.

Setting a height difference between the second end face 2322A and the third end face 211 to be greater than 0.4 millimeters (mm) may provide a sufficient arrangement space for the butt weld between the second connection portion 232 and the casing 21. In another aspect, the inner side face of the casing 21 is also a surface to be fused during welding. Because certain welding stress is generated and welding deformation is caused during welding, there should be a sufficient space between the second end face 2322A and the third end face 211 for accommodating the butt weld to reduce a risk of interference.

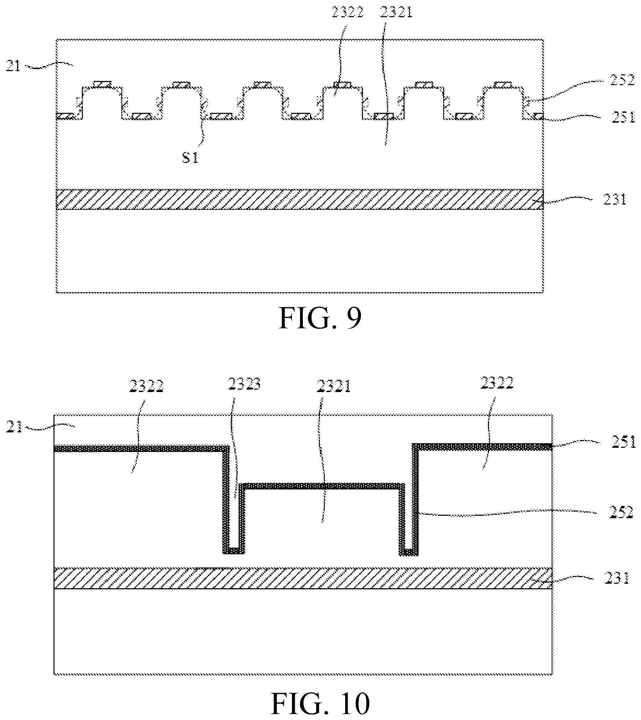

Referring to FIG. 9 and FIG. 10, FIG. 9 is a schematic diagram showing that the current collecting member 23 is connected to the casing 21 through welding according to some other embodiments of the present application, and FIG. 10 is a schematic diagram showing that the current collecting member 23 is connected to the casing 21 through welding according to still some embodiments of the present application. In some embodiments, the second connection portion 232 is welded to the casing 21 to form a first fusion welding portion 25, and a part of the first fusion welding portion 25 is located at a butt seam between a side face of the first protrusion 2321 and the inner side face of the casing 21, and/or at a butt seam between a side face of the second protrusion 2322 and the inner side face of the casing 21. The side face of the first protrusion 2321 is adjacent to the first end face 2321A of the first protrusion 2321 facing away from the first connection portion 231, and the side face of the second protrusion 2322 is adjacent to the second end face 2322A of the second protrusion 2322 facing away from the first connection portion 231.

The height of the first protrusion 2321 is different from that of the second protrusion 2322, and the butt seam formed between the second connection portion 232 and the casing 21 may further include the butt seam formed between the side face of the first protrusion 2321 and the inner side face of the casing 21 and/or the butt seam formed between the side face of the second protrusion 2322 and the inner side face of the casing 21, in addition to butt seams formed between the first end face 2321A and the inner side face of the casing 21 and between the second end face 2322A and the inner side face of the casing 21. As shown in FIG. 9, the first protrusions 2321 and the protrusions 2322 are alternately disposed to form a serrated surface with a square tooth-shaped surface. When a welding position is shifted, welds formed between the second connection portion 232 and the casing 21 through welding include a first butt weld 251 formed at the butt seam between the first end face 2321A and the casing 21 and/or the butt seam between the second end face 2322A and the casing 21, and further include a second butt weld 252 formed at the butt seam between the side face of the first protrusion 2321 and the casing 21 and/or the butt seam between the side face of the second protrusion 2322 and the casing 21. The length of the first fusion welding portion 25 formed in this way includes the length of the first butt weld 251 and the length of the second butt weld 252.

In one example, as shown in FIG. 10, a stress relieving portion 2323 configured as an indentation is disposed between the first protrusion 2321 and the second protrusion 2322, and the bottom of the stress relieving portion 2323, the side face of the first protrusion 2321, and the side face of the second protrusion 2322 each form a part of butt seam between the second connection portion 232 and the casing 21. The first fusion welding portion 25 formed at the time of welding may include not only the first butt weld 251 between the first end face 2321A and the casing 21 and between the second end face 2322A and the casing 21, but also the second butt weld 252 between the side face of the first protrusion 2321 and the casing 21 and between the side face of the second protrusion 2322 and the casing 21.

In the present embodiment, a part of the first fusion welding portion 25 may also be located at the butt seam between the side face of the first protrusion 2321 and the inner side face of the casing 21, and/or the butt seam between the side face of the second protrusion 2322 and the inner side face of the casing 21, so that the length of the first fusion welding portion 25 can be increased, and thus, an overcurrent area between the current collecting member 23 and the casing 21 can be increased, thereby improving an overcurrent capability and connection reliability.

In some embodiments, the second connection portion 232 is welded to the casing 21 to form the first fusion welding portion 25, and in the axial direction of the electrode assembly 22, the height H of the first fusion welding portion 25 from the first connection portion 231 satisfies: H2 ≤ H ≤ H1, where H1 is the maximum height of the second protrusion 2322, and H2 is the minimum height of the first protrusion 2321.

An end face of the second connection portion 232 away from the electrode assembly 22 is no longer a plane at the same height, but a surface with alternating heights. A preset welding trajectory S1 formed when the second connection portion 232 is welded to the casing 21 to form the first fusion welding portion 25 may no longer be a trajectory of a constant height, but a welding trajectory with fluctuating welding positions provided that the trajectory can at least partially coincide with the butt seam between the second connection portion 232 and the casing 21, so that the first fusion welding portion 25 formed by welding has a sufficient length to satisfy requirements for connection and overcurrent.

In one example, the preset welding trajectory S1 for forming the first fusion welding portion 25 may completely coincide with the butt seam between the second connection portion 232 and the casing 21. Because an end of the second connection portion 232 away from the electrode assembly 22 presents an uneven surface, the length of the butt seam between the second connection portion 232 and the casing 21 can be increased. In this case, the preset welding trajectory S1 completely coincides with the butt seam, the length of the first fusion welding portion 25 can be relatively increased even if cold solder joint or missing solder joint is caused due to an error, thereby satisfying the requirements for connection and overcurrent.

The height H of the first fusion welding portion 25 from the first connection portion 231 is between the minimum height H2 of the first protrusion 2321 and the maximum height H1 of the second protrusion 2322, which means that the preset welding trajectory S1 also varies between the minimum height H2 of the first protrusion 2321 and the maximum height H1 of the second protrusion 2322. This is equivalent to that a fluctuation range of the preset welding trajectory S1 is expanded, thereby reducing a precision requirement for butt alignment during welding.

In some embodiments, the perimeter of a projection of the inner side face of the casing 21 on a plane perpendicular to the axial direction of the electrode assembly 22 is L (not shown in the drawings), and the length L1 (not shown in the drawings) of the first fusion welding portion 25 satisfies L1 ≥ 0.2L.

The projection of the inner side face of the casing 21 on the plane perpendicular to the axial direction of the electrode assembly 22 is a closed line. For example, a projection of an inner side face of a cylindrical casing 21 on the plane perpendicular to the axial direction of the electrode assembly 22 is a circle, and the perimeter L of the projection is the length of the circumference. The length L1 of the first fusion welding portion 25 is an accumulated length of the butt weld formed between the second connection portion 232 and the casing 21. In some examples, the length L1 of the first fusion welding portion 25 includes an accumulated length of the first butt weld 251 and an accumulated length of the second butt weld 252.

In some embodiments, the length L1 of the first fusion welding portion satisfies L1 ≥ 0.33L. In this way, the overcurrent area between the current collecting member 23 and the casing 21 can be increased, and the reliability of the welding connection can be improved.

Setting the length L1 of the first fusion welding portion 25 to be greater than or equal to 0.2L can provide a sufficient overcurrent area between the current collecting member 23 and the casing 21, so as to satisfy an overcurrent requirement of the current collecting member 23 in the battery, and improve the reliability of a connection between the current collecting member 23 and the casing 21.

In some embodiments, the first end face 2321A of the first protrusion 2321 away from the electrode assembly 22 includes at least one convex portion, and/or the second end face 2322A of the second protrusion 2322 away from the electrode assembly includes at least one convex portion. The at least one convex portion is one or more of a square tooth, an arc-shaped tooth, a trapezoidal tooth, or a triangular tooth.

The first end face 2321A and/or the second end face 2322A may be non-flat surfaces. For example, the first end face 2321A may include one convex portion to make the first end face 2321A present a non-flat surface that is higher in the middle and lower on both sides. In one instance, the first end face 2321A may further include a plurality of convex portions to make the first end face 2321 present a continuous serrated surface. The convex portion may be a raised toothed structure such as one or more of a square tooth, an arc-shaped tooth, a trapezoidal tooth, or a triangular tooth. The second end face 2322A may also include one or more convex portions, and a structural form of the second end face 2322A may be the same as or different from that of the first end face 2321A. The embodiments of the present application impose no limitation thereto.

Disposing the first end face 2321A and/or the second end face 2322A to include at least one convex portion can increase the length of the butt seam between the second connection portion 232 and the casing 21. This helps form the first fusion welding portion 25 having a sufficient length through welding to satisfy the requirements for overcurrent and connection.

In some embodiments, the electrode assembly 22 further includes a second tab 222, and the second tab 222 and the first tab 221 are respectively located at both ends of the electrode assembly 22. The casing 21 includes a sidewall 212, an opening located at one end of the sidewall 212, and an end wall 213 located at the other end of the sidewall 212. The battery cell 20 further includes an end cap 24 and an electrode lead-out portion 26, the end cap 24 covers the opening and is fixedly connected to the casing 21, and the electrode lead-out portion 26 is insulated from and penetrates the end wall 213 and is electrically connected to the second tab 222.

The end cap 24 is a component that covers the opening of the casing 21 to insulate an internal environment of the battery cell 20 from an external environment. Without limitation, the shape of the end cap 24 may adapt to the shape of the casing 21 to fit the casing 21. In some embodiments, the end cap 24 may be made of a material with certain hardness and strength (e.g., aluminum alloy). As such, the end cap 24 is less prone to deformation under compressive impact, thereby enabling the battery cell 20 to have higher structural strength and improved safety performance. The end cap 24 may be provided with a functional component such as an electrode terminal. The electrode terminal may be used to be electrically connected to the electrode assembly 22 for outputting electric energy from or inputting electric energy into the battery cell 20. In some embodiments, a pressure relief mechanism for relieving internal pressure may be further disposed on the end cap 24 when the internal pressure or temperature of the battery cell 20 reaches a threshold value. The end cap 24 may be made of various materials, such as copper, iron, aluminum, stainless steel, aluminum alloy, plastic, etc. The embodiments of the present application impose no special limitations thereto. In some embodiments, an insulation piece may be further disposed on an inner side of the end cap 24, and the insulation piece may be used to isolate an electrical connection component in the casing 21 from the end cap 24 to reduce a risk of a short circuit. For example, the insulation piece may be plastic, rubber, etc.

The casing 21 and the end cap 24 may be separate components, or the end cap 24 and the casing 21 may be integrated. Specifically, the end cap 24 and the casing 21 may form a common connection surface before other components is fitted into the casing, and then the end cap 24 is brought to cover the casing 21 when an inner side of the casing 21 needs to be enclosed.

In the present embodiment, respectively disposing the first tab 221 and the second tab 222 at both ends of the electrode assembly 22 and conductively connecting the first tab 221 and the second tab 222 to the casing 21 and the electrode lead-out portion 26 respectively are conducive to input and output of electric energy to and from the electrode assembly 22.

In a second aspect, an embodiment of the present application provides a battery 100 including the battery cell 20 provided in the above embodiments.

In a third aspect, an embodiment of the present application provides an electric device including the battery 100 provided in the above embodiment, and the battery 100 is used to supply electric energy.

The battery cell 20 in the present application is further described in detail with reference to an embodiment.

The battery cell 20 includes a casing 21, an electrode assembly 22, a current collecting member 23, an end cap 24, and an electrode lead-out portion 26.

The casing 21 includes a sidewall 212, an opening located at one end of the sidewall 212, and an end wall 213 located at the other end of the sidewall 212. The casing 21 defines an accommodation space for accommodating the electrode assembly 22.

The electrode assembly 22 further includes a second tab 222, and the second tab 222 and the first tab 221 are respectively located at both ends of the electrode assembly 22.

The current collecting member 23 is located at one end in the accommodation space in close proximity to the opening. The current collecting member 23 includes a first connection portion 231 and a second connection portion 232. The first connection portion 231 is electrically connected to the first tab 221. The second connection portion 232 is connected to the first connection portion 231 and protrudes in a direction away from the electrode assembly 22. The second connection portion 232 includes at least one first protrusion 2321 and at least one second protrusion 2322. The height of the second protrusion 2322 is greater than the height of the first protrusion 2321. The at least one first protrusion 2321 is welded to the casing 21, and the at least one second protrusion 2322 is welded to the casing 21. First protrusions 2321 and second protrusions 2322 are alternately disposed in a circumferential direction of the electrode assembly 22.

The second connection portion 232 further includes a stress relieving portion 2323 located between the first protrusion 2321 and the second protrusion 2322 that are adjacent to each other, and the stress relieving portion 2323 is configured as an indentation that penetrates the second connection portion 232 in the thickness direction of the second connection portion 232.

The end cap 24 covers the opening and is fixedly connected to the casing 21, and the electrode lead-out portion 26 is insulated from and penetrates the end wall 213 and is electrically connected to the second tab 222.

The second connection portion 232 is welded to the casing 21 to form a first fusion welding portion 25. The first fusion welding portion 25 includes a first butt weld 251 formed at a butt seam between the first end face 2321A and the casing 21, and/or at a butt seam between the second end face 2322A and the casing 21, and a second butt weld 252 formed at a butt seam between a side face of the first protrusion 2321 and the casing 21, and/or at a butt seam between a side face of the second protrusion 2322 and the casing 21. The perimeter of a projection of the inner side face of the casing 21 on the plane perpendicular to the axial direction of the electrode assembly is L, and the length L1 of the first fusion welding portion 25 satisfies L1 ≥ 0.2L.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery cell, comprising:
an electrode assembly comprising a first tab;
a casing defining an accommodation space and an opening located at one end of the accommodation space, wherein the accommodation space is used for accommodating the electrode assembly; and
a current collecting member located at one end in the accommodation space in close proximity to the opening,
wherein the current collecting member comprises:
a first connection portion electrically connected to the first tab; and
a second connection portion connected to the first connection portion and protruding in a direction away from the electrode assembly, wherein the second connection portion comprises at least one first protrusion and at least one second protrusion, the height of the second protrusion is greater than the height of the first protrusion, the at least one first protrusion is welded to the casing, and the at least one second protrusion is welded to the casing.

2. The battery cell according to claim 1, wherein the second connection portion comprises a plurality of first protrusions and a plurality of second protrusions, and the first protrusions and the second protrusions are alternately disposed in a circumferential direction of the electrode assembly.

3. The battery cell according to claim 2, wherein the second connection portion further comprises at least one stress relieving portion, and the stress relieving portion is at least partially located between the first protrusion and the second protrusion that are disposed adjacent to each other.

4. The battery cell according to claim 3, wherein the stress relieving portion is configured as an indentation, and the indentation penetrates the second connection portion in a thickness direction of the second connection portion.

5. The battery cell according to claim 4, wherein the stress relieving portion comprises a first part and a second part that are connected to each other, the first part is disposed between the first protrusion and the second protrusion that are disposed adjacent to each other, and the second part is disposed on the first connection portion.

6. The battery cell according to claim 5, wherein the first connection portion comprises a hollowed-out portion, one end of the second part is in communication with the first part, and the other end is in communication with the hollowed-out portion.

7. The battery cell according to any one of claims 1 to 6, wherein an outer side face of the second connection portion abuts against an inner side face of the casing.

8. The battery cell according to any one of claims 1 to 7, wherein the casing comprises a third end face that forms the opening, and a first end face of the first protrusion facing away from the first connection portion and a second end face of the second protrusion facing away from the first connection part are both lower than the third end face.

9. The battery cell according to claim 8, wherein a minimum height difference between the second end face of the second protrusion and the third end face is greater than 0.4 mm.

10. The battery cell according to any one of claims 1 to 9, wherein the second connection portion is welded to the casing to form a first fusion welding portion, and a part of the first fusion welding portion is located at a butt seam between a side face of the first protrusion and the inner side face of the casing, and/or at a butt seam between a side face of the second protrusion and the inner side face of the casing,
wherein the side face of the first protrusion is adjacent to the first end face of the first protrusion facing away from the first connection portion, and the side face of the second protrusion is adjacent to the second end face of the second protrusion facing away from the first connection portion.

11. The battery cell according to any one of claims 1 to 10, wherein the second connection portion is welded to the casing to form the first fusion welding portion, and in an axial direction of the electrode assembly, the height H of the first fusion welding portion from the first connection portion satisfies H2 ≤ H ≤ H1;
wherein H1 is the maximum height of the second protrusion from the first connection portion, and H2 is the minimum height of the first protrusion from the first connection portion.

12. The battery cell according to claim 11, wherein the perimeter of a projection of the inner side face of the casing on a plane perpendicular to the axial direction of the electrode assembly is L, and the length L1 of the first fusion welding portion satisfies L1 ≥ 0.2L.

13. The battery cell according to any one of claims 1 to 12, wherein the first end face of the first protrusion away from the electrode assembly comprises at least one convex portion, and/or the second end face of the second protrusion away from the electrode assembly comprises at least one convex portion, and the at least one convex portion is one or more of a square tooth, an arc-shaped tooth, a trapezoidal tooth, or a triangular tooth.

14. The battery cell according to any one of claims 1 to 13, wherein the electrode assembly further comprises a second tab, the second tab and the first tab are respectively located at both ends of the electrode assembly, and
the casing comprises a sidewall, the opening located at one end of the sidewall, and an end wall located at the other end of the sidewall; and
the battery cell further comprises:
an end cap that covers the opening and is fixedly connected to the casing; and
an electrode lead-out portion that is insulated from and penetrates the end wall and is electrically connected to the second tab.

15. A battery, comprising the battery cell according to any one of claims 1 to 14.

16. An electric device, comprising the battery according to claim 15, wherein the battery is used for supplying electric energy.
